# EUROPÄISCHE PATENTANMELDUNG

(11) **EP 1 653 078 A1**
(43) Veröffentlichungstag der Anmeldung: **03.05.2006**
(21) Anmeldenummer: 05405559.5
(22) Anmeldetag: 27.09.2005
(51) Int. Cl.: F02N 9/04, F02N 17/00, F02D 13/02

(54) **Dieselmaschine, insbesondere Groossdieselmotor, mit einem elektronischen Steuerungssystem und ein Verfahren zum Starten der Dieselmaschine**

(30) Priorität: 26.10.2004 EP 04405660
(71) Anmelder: Wärtsilä Schweiz AG, 8401 Winterthur (CH)
(72) Erfinder: Fankhauser, Stefan, 8542 Wiesendangen (CH)
(74) Vertreter: Sulzer Management AG

(57) **Zusammenfassung**

Die Dieselmaschine (1), insbesondere ein Grossdieselmotor, hat ein Steuerungssystem (7), das zumindest teilweise elektronisch betrieben ist. Einer Mehrzahl von durch Zylinder (2) sowie Kolben (3) gebildeten Arbeitsräumen (20) sind jeweils mindestens eine Einspritzdüse (26) für Brennstoff, eine Einspeisedüse (25) für Startluft und ein Gaswechselventil (23) für gasförmigen Arbeitsrauminhalt zugeordnet. Zeitintervalle zum Aktivieren der Einspritz- und Einspeisedüsen sowie der Gaswechselventile sind flexibel programmierbare Steuerzeiten. Diese Steuerzeiten sind elektronisch durch das Steuerungssystem optimal einstellbar: Es ergeben sich in einem ersten Arbeitsraum durch Verdichten Zündbedingungen für den Brennstoff. Die dabei benötigte Energie ist mittels Arbeitsleisten durch Einspeisen von Startluft in mindestens einen zweiten Arbeitsraum lieferbar. Jedes Gaswechselventil ist entsprechend dem im zugeordneten Arbeitsraum ablaufenden Vorgang - dem Verdichten, dem Arbeitsleisten bzw. einem vorteilhafterweise durchgeführten Passivhalten mit einem Druckausgleich zum Umgebungsdruck und ohne Einspritzung von Brennstoff - betätigbar.

## Beschreibung

Die Erfindung betrifft eine Dieselmaschine, insbesondere einen Grossdieselmotor, mit einem elektronischen Steuerungssystem gemäss Oberbegriff von Anspruch 1. Sie betrifft auch ein Verfahren zum Starten der erfindungsgemässen Dieselmaschine. Die zum Starten vorgesehenen Mittel zum Anlassen der Maschine (kurz Anlassmittel) sind auch beim Bremsen und Umsteuern der Maschine verwendbar.

Grossdieselmotoren sind in der Regel während Stunden oder Tagen in Betrieb. Das Starten eines solchen Motors ist daher ein relativ seltenes Ereignis. Demzufolge sind Anlassmittel zum Starten aus Kostengründen auf das Nötigste beschränkt ausgebildet worden.

Als vorteilhaft hat sich zum Anlassen Druckluft erwiesen. Mit Startluft, wie die zum Starten sowie Bremsen und Umsteuern verwendete Druckluft kurz bezeichnet wird, können beim Anlassen einzelne der Motorzylinder angetrieben werden, um bei einem weiteren Zylinder die in dessen Arbeitsraum enthaltene atmosphärische Luft zu verdichten. Es wird dabei im Arbeitsraum des weiteren Zylinders ein thermodynamischer Zustand erzeugt, in dem hohe Werte des Drucks und der Temperatur Bedingungen ermöglichen, bei denen ein in den Zylinder eingespritzter Brennstoff sich entzündet.

Die Menge an Startluft, die mit Speichern (Akkumulatoren) zur Verfügung gestellt wird, muss es erlauben, dass ausgehend von einem Anfangsdruck von 30 bar eine vorgegebene Anzahl von Startvorgängen bei abnehmendem Speicherdruck bis auf 8 bar durchführbar sind, beispielsweise rund 10 Mal. Besonders ausgebildete Startluftverteiler sind auf Hochseeschiffen im Einsatz. Bei einer einfachen Ausführungsform umfasst der Startluftverteiler eine zu drehende Scheibe mit Durchbrüchen zwecks intermittierendem Luftdurchtritt, wobei die Durchbrüche in Form von Ringsegmenten konzentrisch um die Drehachse der Scheibe angeordnet sind. Durch solche mechanische Startluftverteiler oder auch andere, wie sie heute im Einsatz sind, werden Zeitintervalle festgelegt, die sich teilweise überlappen und während denen Druckluft in Einspeiseleitungen der anzutreibenden Zylinder eingelassen wird.

Diese Zeitintervalle, die Steuerzeiten des Startluftverteilers, sind aufgrund der verwendeten mechanischen Mitteln nach einer Installation des Verteilers auf einem Hochseeschiff unveränderbar vorgegeben. Die starren Steuerzeiten haben zur Folge, dass die Druckluft teilweise Zylindern mit ungünstig positonierten Kolben zugeführt wird, bei denen die resultierende Arbeitsleistung lediglich einen kleinen Beitrag zum Anlassvorgang liefert. Es wird bei den ungünstigen Verhältnissen eine geringe Arbeitsleistung mit einer relativ grossen Menge an Druckluft erkauft. Diese Menge ist durch das maximale Volumen des Arbeitsraums gegeben. Der Arbeitsraum wird im Extremfall weitgehend wirkungslos mit Druckluft gefüllt; denn der Arbeitsrauminhalt entweicht in die Umgebung, wenn sich der Kolben dem unteren Totpunkt nähert, und ist somit verloren.

Aufgabe der Erfindung ist es, eine Dieselmaschine zu schaffen, bei der durch Nutzung einer elektronischen Steuerung der Startlufverbrauch verkleinert wird, so dass die Erstellungskosten für als Anlassmittel verwendete Einrichtungen reduziert werden, wobei gleichzeitig auch der Bedarf an Energie für das Anlassverfahren kleiner wird. Diese Aufgabe wird durch die im Anspruch 1 definierte Dieselmaschine gelöst.

Die Dieselmaschine, insbesondere ein Grossdieselmotor, hat ein Steuerungssystem, das zumindest teilweise elektronisch betrieben ist. Einer Mehrzahl von durch Zylinder sowie Kolben gebildeten Arbeitsräumen sind jeweils mindestens eine Einspritzdüse für Brennstoff, eine Einspeisedüse für Startluft und ein Gaswechselventil für gasförmigen Arbeitsrauminhalt zugeordnet. Zeitintervalle zum Aktivieren der Einspritz- und Einspeisedüsen sowie der Gaswechselventile sind flexibel programmierbare Steuerzeiten. Diese Steuerzeiten sind elektronisch durch das Steuerungssystem optimal einstellbar: Es ergeben sich in einem ersten Arbeitsraum durch Verdichten Zündbedingungen für den Brennstoff. Die dabei benötigte Energie ist mittels Arbeitsleisten durch Einspeisen von Startluft in mindestens einen zweiten Arbeitsraum lieferbar. Jedes Gaswechselventil ist entsprechend dem im zugeordneten Arbeitsraum ablaufenden Vorgang - dem Verdichten, dem Arbeitsleisten bzw. einem vorteilhafterweise durchgeführten Passivhalten mit einem Druckausgleich zum Umgebungsdruck und ohne Einspritzung von Brennstoff- betätigbar.

Bei der erfindungsgemässen Dieselmaschine kann - was aber als Ausnahme zu verstehen ist - der Einsatz der elektronischen Steuerung auf das Anlassverfahren beschränkt sein.

Die abhängigen Ansprüche 2 bis 6 betreffen vorteilhafte Ausführungsformen der erfindungsgemässen Dieselmaschine. Verfahren zum Anlassen der Dieselmaschine sind Gegenstand der Ansprüche 7 bis 9.

Nachfolgend wird die Erfindung anhand der Zeichnungen erläutert. Es zeigen:
- Fig. 1: Diagramme zu bekannten Anlassmitteln, die jeweils den Öffnungszustand von Einspeisedüsen für Startluft darstellen,
- Fig. 2: stark vereinfacht eine ausschnittsweise dargestellte Dieselmaschine mit einem teilweise aufgebrochenen Zylinder,
- Fig. 3: einen Längsschnitt durch den Zylinder,
- Fig. 4: Kräfteverhältnisse, die an der Kurbelwelle der Dieselmaschine vorliegen, und
- Fig. 5: ein Schema zur Steuerung von Mitteln zum Starten der erfindungsgemässen Dieselmaschine unter Verwendung von Druckluft.

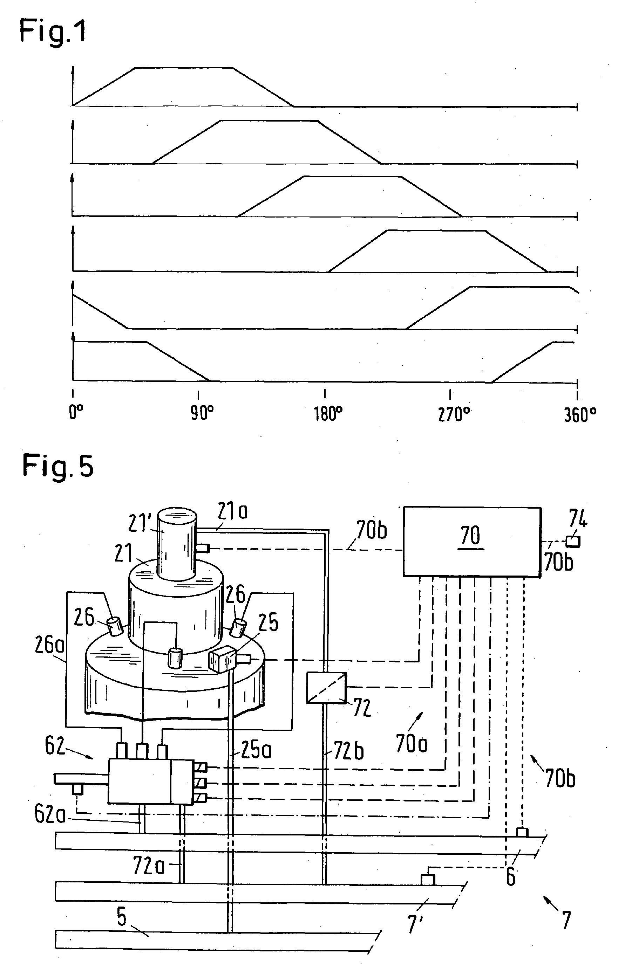

Die Fig. 1 zeigt für eine bekannte Dieselmaschine mit sechs Zylindern Diagramme zu Anlassmitteln. Die sechs Diagramme stellen jeweils den Öffnungszustand von Einspeisedüsen für Startluft dar, wobei auf der Abzisse der Drehwinkel der Kurbelwelle angegeben ist. Die trapezförmigen Kurvenstücke geben die Aktivierung der Einspeisedüsen an, d. h. wann sie geöffnet bzw. wieder geschlossen werden. Die Anordnung der Diagramme entspricht nicht der Position der Zylinder in der Maschine sondern der zeitlichen Reihenfolge, in der die Einspeisedüsen beim Anlassen aktiviert werden. Die Fig. 1 veranschaulicht die starren Steuerzeiten und Überlappungen, die einen wenig effizienten Druckluftverbrauch zur Folge haben.

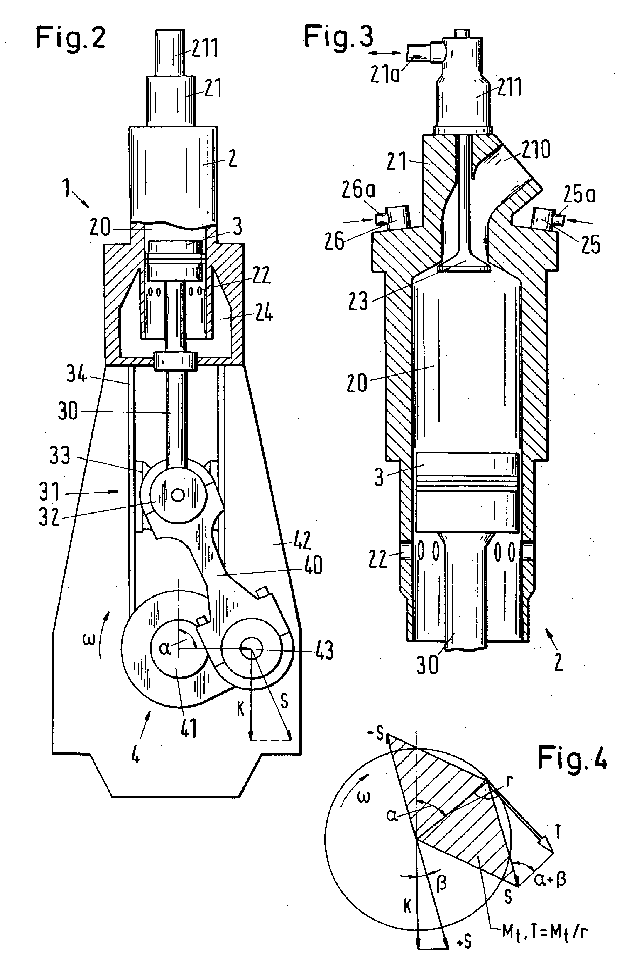

Die Komponenten einer Dieselmaschine 1 - siehe die Figuren 2 und 3 - sind wie folgt: Ein Zylinder 2 und ein Kolben 3, die einen Arbeitsraum 20 einschliessen; eine Kopfpartie 21 des Zylinders 2 mit Gaswechselventil 23, Lufteinspeisekanal 210 und Antriebseinheit 211 für das Gaswechselventil 23; Gaswechselöffnungen 22 im unteren Bereich des Zylinders 2, die einen Durchlass aus dem Arbeitsraum 20 in einen Zylinderraum 24 herstellen, wenn der Kolben 3 sich in der unteren Totpunktlage oder deren Nähe befindet; und innerhalb eines Triebwerkraums 42 eine vom Kolben 2 ausgehende Kolbenstange 30, die beim Betreiben der Dieselmaschine 1 über einen Kreuzkopf 31 und eine Schubstange 40 auf eine Antriebswelle eines Triebwerks 4 einwirkt und dabei Kurbelwellen 41 mit einer Winkelgeschwindigkeit ω dreht (Drehwinkel α). Der Kreuzkopf 31 (Kreuzkopfzapfen 32) läuft mit Gleitschuhen 33 auf Schienen 34 auf und ab - durch den zwischen unterer und oberer Totpunktlage sich bewegenden Kolben 3 angetrieben. Eine Mehrzahl von Einspritzdüsen 26 für Brennstoff (vgl. Fig. 5) und eine Einspeisedüse 25 für Startluft sind am Zylinder 2 auf der Höhe des Gaswechselventils 23 angeordnet.

Auf ein Kurbellager 43 wirkt die Schubstange 40 mit einer Kraft S ein, die sich aus einer durch den Kolben ausgeübten Kraft K und einer durch die Schiene 34 ausgeübten Reaktionskraft, eine nicht dargestellte Normalkraft auf die Gleitbahn, zusammensetzt (vgl. DUBBEL, Taschenbuch für den Maschinenbau, Bd. 2, S. 263, 13. Auflage, 1974). Die Kraft K ist das Produkt aus der beaufschlagten Fläche A des Kolbens 2 und dem Überdruck im Arbeitsraum 20 (K = A * (p - p₀), wobei p der Druck im Arbeitsraum 20 ist und p₀ der Umgebungsdruck). Wie die in Fig. 4 dargestellten, an der Kurbelwelle 41 vorliegenden Kräfteverhältnisse zeigen, wird mit dem Hebelarm r der Kurbel eine Drehkraft T erzeugt, aus der ein dem Kräftepaar +S, -S entsprechendes Nutzmoment Mₜ resultiert. Dieses Nutzmoment Mₜ hat einen Betrag, der gleich der schraffierten, durch das Kräftepaar aufgespannten Fläche ist. Wie man sieht, verschwindet das Nutzmoment Mₜ, wenn der Kolben in einer Totpunktlage angelangt ist (d.h. für α = 0° bzw. 180°).

Das in Fig. 5 dargestellte Schema zur Steuerung zeigt als Beispiel die Mittel, die erfindungsgemäss zum Starten einer Dieselmaschine (mit "Common Rail") unter Verwendung von Druckluft vorgesehen sind. Ein elektronischer Steuerungskomplex 70 ist über Leitungen 70a für Steuerungssignale und Leitungen 70b für Messignale mit diversen Komponenten des weiteren Steuerungssystems 7 verbunden. Diese Komponenten sind eine Steuereinheit 62, mit welcher der Brennstoff aus einem Akkumulator 6 (= "Common Rail"; Speicherdruck beispielsweise 1000 bar) durch eine Speiseleitung 62a und Verteilleitungen 26a den Einspritzdüsen 26 nach einem Programm gesteuert zugeführt wird, ein auf das Gaswechselventil 23 einwirkenden Aktor 72 und die Einspeisedüse 25 für die Startluft, die aus einem Speicher 5 (Speicherdruck beispielsweise 30 bar) zugeführt wird. Zum Ansteuern der Steuereinheit 62 und des Aktors 72 wird ein Servo-Oel aus einem Speicher 71 (Speicherdruck beispielsweise 200 bar) verwendet und dabei durch Leitungen 72a und 72b druckübertragend hin und her verschoben. Im Aktor 72 ist dieses Servo-Oel durch eine Membran von einem zweiten, qualitativ weniger guten Oel getrennt, mit dem über die Leitung 21a das Gaswechselventil 23 betätigbar ist. Mit dem Steuerungskomplex 70 steht auch ein Sensor 74 für die Registrierung des Winkels α in Verbindung.

Zeitintervalle zum Aktivieren der Einspritz- und Einspeisedüsen 26 bzw. 25 sowie der Gaswechselventile 23 sind bei konventionellen Dieselmaschinen als feste Grössen vorgegeben (vgl. Fig. 1). Erfindungsgemäss sind diese Steuerzeiten programmierbare Zeitintervalle. Sie sind durch das Steuerungssystem optimal einstellbar. Aufgrund dieser Steuerung, die eine variable Steuerung ist, werden einem ersten Arbeitsraum 20 durch Verdichten von in diesem enthaltenen Luft Zündbedingungen für den Brennstoff hergestellt. Die dabei benötigte Energie wird über das Triebwerk 4, durch das alle Kolben 3 mechanisch mit einander gekoppelt sind, mittels einem zweiten Arbeitsraum 20 geliefert, indem zur Arbeitsleistung in diesen Arbeitsraum 20 Startluft eingespiesen wird. Die im ersten Arbeitsraum 20 zum Verdichten benötigte Arbeit kann auch mit zwei oder mehr Zylindern 2 geleistet werden. Die weiteren Arbeitsräume 20, die beim Startvorgang unbeteiligt sind, werden mit Vorteil passiv gehalten. Bei diesem Passivhalten wird kein Brennstoff eingespritzt und ein Druckausgleich zum Umgebungsdruck vorgenommen, indem die Gaswechselventile 23 geöffnet werden. Jedes Gaswechselventil 23 wird durch das Steuerungssystem 7 dem im zugeordneten Arbeitsraum 20 ablaufenden Vorgang - dem Verdichten, dem Arbeitsleisten bzw. dem Passivhalten - entsprechend betätigt.

Beim Verdichten nimmt der Druck p im ersten Arbeitsraum 20 auf einer Druckkurve zu, deren Steigung mit kleiner werdendem Volumen des Arbeitsraums 20 anwächst. Der Maximaldruck wird in der oberen Totpunktlage des Kolbens erreicht, wenn das Drehmoment Mₜ - auch bei einem hohen Druck - gegen Null gehend immer kleiner wird. Wie man also leicht einsieht, kann mit dem Energie liefernden Zylinder 2 durch Startluft von beispielsweise 30 bar, die in dessen, d.h. den zweiten Arbeitsraum 20 eingelassen wird, die zu verdichtende Luft des ersten Arbeitsraums 20 auf einen Druck wesentlich höher als die 30 bar gebracht werden.

Die für das Anlassen zu verwendende Startluft wird mit Speichern oder einem Speicher 5 bereit gestellt. Ausgehend von einem Anfangsdruck von mindestens 20 bar, vorzugsweise 30 bar, lassen sich eine vorgegebene Anzahl von Startvorgängen bei abnehmendem Speicherdruck durchführen. Unterschreitet der Speicherdruck einen bestimmten Wert, so kann die für das Verdichten benötigte Energie nicht mehr durch lediglich einen Zylinder 2 geliefert werden. Bei Bedarf kann die Anzahl der energieliefernden Zylinder 2 (d.h. der zweiten Arbeitsräume 20) durch das Steuerungssystem 7 auf zwei oder mehr erhöht werden. Die Startvorgänge sind so bei abnehmendem Speicherdruck bis auf 10 bar oder vorzugsweise tiefer, beispielsweise 8 bar, durchführbar.

Der Steuerungskomplex 70 wird mit Vorteil aus elektronischen Modulen zusammengesetzt. Mit diesen Modulen, die alle gleich ausgebildet sein können, sind lokale, die Zylinder 2 betreffende Funktionen und globale, die gesamte Maschine 1 betreffende Funktionen beeinflussbar. Dabei ist jeder Zylinder einem Modul zugeordnet. Jeder dieser Module mit einer identisch ausgebildeten Logikschaltung umfasst einen ersten und einem zweiten Funktionsteilbereich. Mit dem ersten Funktionsteilbereich ist der zugeordnete Zylinder 2 steuerbar. Die globalen Funktionen, insbesondere die Startluftzufuhr, sind durch eine auf die Module verteilte Steuerung beeinflussbar. Dabei ist die globale Steuerung in einer redundanten Weise durchführbar, nämlich so, dass diese sich durch mindestens einen Teil der Module mit jeweils dem zweiten Funktionsteilbereich in Zusammenspiel mit zweiten Funktionsteilbereichen der weiteren Module durchführen lässt.

Die redundante Steuerung mit einem modularen Steuerungskomplex 70 ist in der nicht vorveröffentlichten Anmeldung EP 04405073.0 beschrieben. Eine weitere nicht vorveröffentlichten Anmeldung, die EP 04405255.3, offenbart einen modularen Steuerungskomplex, bei dem zur Behebung von Ausfällen im Steuerungssystem Ersatzmodule zur Verfügung stehen: Mit einem intermodularen Busleitungssystem ist Information zwischen den Modulen übermittelbar. Am intermodularen Busleitungsystem ist mindestens eine Anschlussstelle für Ersatzmodule vorgesehen, an der ein angeschlossenes Ersatzmodul selbsttätig durch das Steuerungssystem vorkonditionierbar ist, nämlich durch Laden mit einem spezifischen Betriebsprogramm und Aktualisierung von Betriebsparametern. Dieses Ersatzmodul ist neben dem aktiv laufenden Steuerungssystem passiv bleibend im Leerlauf mitbetreibbar. Bei Versagen eines aktiven Moduls steht das Ersatzmodul zur Substitution des versagenden Moduls sofort zum Einsatz bereit. An der Anschlussstelle des zu substituierenden Moduls am intermodularen Busleitungsystem wird das vorkonditionierte Ersatzmodul eingesetzt.

Bei der erfindungsgemässen Dieselmaschine 1 mit modularem Steuerungskomplex 70 stehen die Module jeweils mit folgenden Komponenten der Maschine 1 in signalübermittelnden Verbindungen 70a, 70b:
- dem Ventil 25 für die Startluftzufuhr in den zugeordneten Zylinder 2,
- einem Einspritzsystem, das die Einspritzventile 26 umfasst,
- einem Gaswechselsystem, das das Gaswechselventil 23 und die Gaswechselöffnungen 22 umfasst,
- Pumpen zum Zuführen des Brennstoffs und des Servo-Oels (nicht dargestellt),
- dem Speicher 5 für die Startluft, dem Speicher 71 für das Steuermedium, dem Servo-Oel, und dem Speicher 6 für den Brennstoff, dem sogenannten "Common Rail", wobei diese Speicher mit den Pumpen, den Einspritzsystemen und den Gaswechselsystemen verbunden sind,
- einem hydraulischen System mit Organen 62 und 72 zur Durchführung des Einspritzens und des Gaswechsels, und
- Winkelerfassung 74 zur Synchronisation der lokalen und globalen Funktionen mit der Drehung des Triebwerks 4.

Beim erfindungsgemässen Verfahren zum Anlassen der Dieselmaschine 1 übt das Steuerungssystem 7 folgende Funktion aus: In Bezug auf den erfassten Drehwinkel α der Kurbelwellen 41 werden die Zylinder 2 hinsichtlich den durchzuführenden Vorgängen - dem Verdichten, dem Arbeitsleisten und dem Passivhalten (mit einem Druckausgleich zum Umgebungsdruck und ohne Einspritzung von Brennstoff) - ausgewählt. Die zum Anlassen des Motors 1 erforderlichen Schritte, insbesondere die Einspeisung von Startluft, werden eingeleitet sowie gesteuert. Dabei wird die Auswahl der ersten bzw. zweiten Arbeitsräume 20 aufgrund der Position des Kolbens getroffen. Mit Vorteil wird der Zylinder, dessen Kolben am nächsten beim unteren Totpunkt - nach Durchlaufen dieses Totpunkts - positioniert ist, für das Verdichten ausgewählt. Mindestens ein Zylinder 2, dessen Kolben 3 nach dem oberen Totpunkt und in dessen Nähe positioniert ist, wird vorteilhafterweise für das Arbeitsleisten ausgewählt. Die in den Arbeitsraum 20 dieses Zylinders 2, den zweiten Arbeitsraum 20, eingelassene Startluft wird so praktisch vollständig zur Verdichtung im ersten Arbeitsraum 20 genutzt.

Wie bereits gesagt, kann die Startluft durch das Steuerungsystem 7 mit der variablen Steuerung, wie es das erfindungsgemässe Verfahren vorsieht, auch für ein Bremsen und/oder ein Umsteuern des Motors 1 verwendet werden. Die Verwendung der variablen Steuerung der Startluft beim Bremsen bzw. Umsteuern ermöglicht eine Beschleunigung und effizientere Durchführung dieser Operationen.

## Patentansprüche

1. Dieselmaschine (1), insbesondere Grossdieselmotor, mit einem Steuerungssystem (7), das zumindest teilweise elektronisch betrieben ist, und mit einer Mehrzahl von durch Zylinder (2) sowie Kolben (3) gebildeten Arbeitsräumen (20), denen jeweils mindestens eine Einspritzdüse (26) für Brennstoff, eine Einspeisedüse (25) für Startluft und ein Gaswechselventil (23) für gasförmigen Arbeitsrauminhalt zugeordnet sind,
**dadurch gekennzeichnet, dass** Zeitintervalle zum Aktivieren der Einspritz- und Einspeisedüsen sowie der Gaswechselventile flexibel programmierbare Steuerzeiten sind, und dass diese Steuerzeiten elektronisch durch das Steuerungssystem optimal einstellbar sind nämlich so, dass sich in einem ersten Arbeitsraum durch Verdichten Zündbedingungen für den Brennstoff ergeben, dass die dabei benötigte Energie mittels Arbeitsleisten durch Einspeisen von Startluft in mindestens einen zweiten Arbeitsraum lieferbar ist und dass jedes Gaswechselventil dem im zugeordneten Arbeitsraum ablaufenden Vorgang - dem Verdichten, dem Arbeitsleisten bzw. einem vorteilhafterweise durchgeführten Passivhalten mit einem Druckausgleich zum Umgebungsdruck und ohne Einspritzung von Brennstoff - entsprechend betätigbar ist.

2. Dieselmaschine nach Anspruch 1, **dadurch gekennzeichnet, dass** für das Anlassen die Startluft mit Speichern (5) bereit gestellt sind und dass ausgehend von einem Anfangsdruck in den Speichern von mindestens 20 bar, vorzugsweise 30 bar, eine vorgegebene Anzahl von Startvorgängen bei abnehmendem Speicherdruck durchführbar sind, wobei bei Bedarf wegen des Absinkens des Speicherdrucks die Anzahl der energieliefernden Arbeitsräume (20) durch das Steuerungssystem (7) erhöhbar ist.

3. Dieselmaschine nach Anspruch 2, **dadurch gekennzeichnet, dass** die Startvorgänge bei abnehmendem Speicherdruck bis auf 10 bar oder tiefer, vorzugsweise 8 bar, durchführbar sind.

4. Dieselmaschine nach einem der Ansprüche 1 bis 3, **dadurch gekennzeichnet, dass** das Steuerungssystem (7) elektronische Module umfasst, mit denen lokale, die Zylinder (2) betreffende Funktionen und globale, die gesamte Maschine (1) betreffende Funktionen beeinflussbar sind, dass jeder Zylinder einem Modul zugeordnet ist, dass jeder dieser Module eine identisch ausgebildete Logikschaltung mit einem ersten und einem zweiten Funktionsteilbereich umfasst, dass mit dem ersten Funktionsteilbereich der zugeordnete Zylinder steuerbar ist und dass die globalen Funktionen, insbesondere das Anlassen, durch eine auf die Module verteilte Steuerung beeinflussbar sind, nämlich so, dass für mindestens einen Teil der Module mit jeweils dem zweiten Funktionsteilbereich in Zusammenspiel mit zweiten Funktionsteilbereichen der weiteren Module die globale Steuerung in einer redundanten Weise durchführbar ist.

5. Dieselmaschine nach Anspruch 4, **dadurch gekennzeichnet, dass** mit einem intermodularen Busleitungssystem Information zwischen den Modulen übermittelbar ist und zur Behebung von Ausfällen im Steuerungssystem (7) Ersatzmodule zur Verfügung stehen, dass am intermodularen Busieitungsystem mindestens eine Anschlussstelle für Ersatzmodule vorgesehen ist, an der ein angeschlossenes Ersatzmodul selbsttätig durch das Steuerungssystem vorkonditionierbar ist, nämlich durch Laden mit einem spezifischen Betriebsprogramm und Aktualisierung von Betriebsparametern, dass dieses Ersatzmodul neben dem aktiv laufenden Steuerungssystem passiv bleibend im Leerlauf mitbetreibbar ist und dass bei Versagen eines aktiven Moduls das Ersatzmodul zur Substitution des versagenden Moduls sofort einsatzbereit ist, wobei an der Anschlussstelle des zu substituierenden Moduls am intermodularen Busleitungsystem das vorkonditionierte Ersatzmodul einzusetzen ist.

6. Dieselmaschine nach einem der Ansprüche 4 oder 5, **dadurch gekennzeichnet, dass** die Module (10) des Steuerungssystems (1) jeweils mit folgenden Komponenten der Maschine in signalübermittelnder Verbindung (100) stehen:
- einem Ventil für eine Startluftzufuhr in den zugeordneten Zylinder (2),
- einem Einspritzsystem zum Einspeisen von Brennstoff, einem Gaswechselsystem und Pumpen zum Zuführen des Brennstoffs und eines Steuermediums,
- einem Speicher (5) für die Startluft, einem Speicher (71) für das Steuermedium und einem Speicher (6) für den Brennstoff, einem sogenannten "Common Rail", wobei diese Speicher mit den Pumpen, den Einspritzsystemen und den Gaswechselsystemen verbunden sind,
- einem hydraulischen System mit Organen (62) und (72) zur Durchführung des Einspritzens und des Gaswechsels, und
- Winkelerfassung (74) zur Synchronisation der lokalen und globalen Funktionen mit der Drehung des Triebwerks (4).

7. Verfahren zum Anlassen einer Dieselmaschine (1) gemäss Anspruch 6, **dadurch gekennzeichnet, dass** durch das Steuerungssystem (7) in Bezug auf den erfassten Drehwinkel der Antriebswelle die Zylinder (2) hinsichtlich den durchzuführenden Vorgängen - dem Verdichten, dem Arbeitsleisten und dem Passivhalten - ausgewählt werden und die zum Anlassen der Maschine erforderlichen Schritte eingeleitet sowie gesteuert werden, wobei die Auswahl der Zylinder, d.h. der ersten bzw. zweiten Arbeitsräume (20), bezüglich Position des Kolbens (3) getroffen wird und mit Vorteil der Zylinder, dessen Kolben am nächsten beim unteren Totpunkt positioniert ist, für das Verdichten und mindestens ein Zylinder, dessen Kolben in der Nähe des oberen Totpunkts und nach Durchlaufen dieses Totpunkts positioniert ist, für das Arbeitsleisten ausgewählt werden.

8. Verfahren nach Anspruch 7, **dadurch gekennzeichnet, dass** die Startluft durch das Steuerungsystem (7) auch für ein Bremsen und/oder ein Umsteuern der Maschine verwendet werden kann.

9. Verfahren nach Anspruch 7 oder 8, **dadurch gekennzeichnet, dass** die Gaswechselventile (23) der passiv zu haltenden Arbeitsräume (20) geöffnet werden und die Gaswechselventile des zu verdichtenden und des mit Startluft beaufschlagten Arbeitsraums oder eine Mehrzahl solcher Arbeitsräume geschlossen werden.
